(19) **Europäisches Patentamt / European Patent Office / Office européen des brevets**

(11) **EP 4 787 088 A1**

(12) **EUROPEAN PATENT APPLICATION**
published in accordance with Art. 153(4) EPC

(43) Date of publication:
05.08.2026 Bulletin 2026/32

(21) Application number: 24891078.8

(22) Date of filing: 18.09.2024

(51) International Patent Classification (IPC):
*G05B 13/04* (2006.01)    *H02P 31/00* (2006.01)

(52) Cooperative Patent Classification (CPC):
G05B 13/04; H02P 31/00

(86) International application number:
PCT/JP2024/033364

(87) International publication number:
WO 2025/105036 (22.05.2025 Gazette 2025/21)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 17.11.2023 JP 2023195836

(71) Applicant: Panasonic Intellectual Property
Management Co., Ltd.
Kadoma-shi, Osaka 571-0057 (JP)

(72) Inventors:
• HIROTSUNE, Satoshi
Kadoma-shi, Osaka 571-0057 (JP)
• ARAI, Takeshi
Kadoma-shi, Osaka 571-0057 (JP)
• SATO, Taichi
Kadoma-shi, Osaka 571-0057 (JP)

(74) Representative: Grünecker Patent- und
Rechtsanwälte
PartG mbB
Leopoldstraße 4
80802 München (DE)

(54) **INFORMATION PROCESSING METHOD, INFORMATION PROCESSING DEVICE, AND PROGRAM**

(57) An information processing device acquires training data including configuration information regarding a configuration of a system, required performance item information regarding a required performance item for an operation of a target device, setting information regarding setting of an evaluation function, calculation method selection information regarding selection of a parameter calculation method from among a plurality of parameter calculation methods, and evaluation information regarding an evaluation result of drive performance of the target device by a servomotor, and generates an estimation model that estimates at least one of optimal setting of an evaluation function and optimal selection of the parameter calculation method based on the configuration information and the required performance item information by machine learning using a plurality of pieces of training data.

FIG.1

## Description

### Technical Field

The present disclosure relates to an information processing method, an information processing device, and a program.

### Background Art

An output device according to the background art is disclosed in Patent Literature 1. The output device includes an output section and an information acquisition unit. The output section acquires servo information from a servo control device, and outputs a plurality of evaluation functions used in a machine learning device and a machine learning result of each evaluation function. The information acquisition unit acquires a machine learning result from at least one of the servo control device and the machine learning device.

In a system including a servomotor, a target device driven by the servomotor, and a control device that controls an operation of the servomotor based on a control parameter, optimal setting of an evaluation function and optimal selection of a parameter calculation method used for machine learning differ depending on a configuration of the system and a required performance item of a target device.

In the background art, no consideration has been made on setting an optimal evaluation function and selecting an optimal parameter calculation method according to a configuration of a system and a required performance item of a target device.

### Citation List

### Patent Literature

Patent Literature 1: JP 6849643 B2

### Summary of Invention

An object of the present disclosure is to obtain an information processing method, an information processing device, and a program capable of setting an optimal evaluation function and selecting an optimal parameter calculation method according to a configuration of a system and a required performance item of a target device.

### Problems to be Solved by the Invention

An information processing method according to one aspect of the present disclosure is an information processing method of generating an estimation model for setting an execution condition of optimization processing for a control parameter in a system including a servomotor, a target device driven by the servomotor, and a control device that controls an operation of the servomotor based on the control parameter, the optimization processing including acquiring at least one signal regarding an operation of the system, calculating an evaluation value by using an evaluation function for the at least one signal, and optimizing the control parameter by a parameter calculation method based on the evaluation value, the information processing method 'including acquiring, by an information processing device, training data including configuration information regarding a configuration of the system, required performance item information regarding a required performance item for an operation of the target device, setting information regarding setting of the evaluation function, calculation method selection information regarding selection of the parameter calculation method from among a plurality of parameter calculation methods, and evaluation information regarding an evaluation result of drive performance of the target device by the servomotor, and generating an estimation model that estimates at least one of optimal setting of the evaluation function and optimal selection of the parameter calculation method based on the configuration information and the required performance item information by machine learning using a plurality of pieces of training data.

### Brief Description of Drawings

FIG. 1 is a diagram illustrating, in a simplified manner, an overall configuration of a servo control system according to an embodiment of the present disclosure.
FIG. 2 is a diagram illustrating, in a simplified manner, a configuration of an adjustment device and a servo system.

FIG. 3 is a diagram illustrating, in a simplified manner, an example of a configuration of a control device.

FIG. 4 is a diagram illustrating, in a simplified manner, a functional configuration of a processing unit related to optimization processing.

FIG. 5 is a diagram for explaining settling time and a settling range.

FIG. 6 is a diagram for explaining an attenuation amount and an attenuation rate of a peak value of position deviation.

FIG. 7 is a diagram illustrating, in a simplified manner, a functional configuration of a processing unit related to processing of setting an execution condition of optimization processing.

FIG. 8 is a diagram illustrating, in a simplified manner, an example of a setting screen regarding processing of generating training data.

FIG. 9 is a diagram illustrating various operation patterns of a servomotor.

FIG. 10 is a diagram illustrating a first example of generation of evaluation information.

FIG. 11 is a diagram illustrating a second example of generation of evaluation information.

FIG. 12 is a flowchart illustrating a first example of processing executed by a processing unit regarding processing of generating training data.

FIG. 13 is a flowchart illustrating details of processing of generating training data.

FIG. 14 is a flowchart illustrating a second example of the processing executed by the processing unit regarding processing of generating training data.

FIG. 15 is a flowchart illustrating a third example of the processing executed by the processing unit regarding processing of generating training data.

FIG. 16 is a flowchart illustrating processing executed by the processing unit regarding training processing.

FIG. 17 is a diagram illustrating, in a simplified manner, an example of a setting screen regarding training processing.

FIG. 18 is a diagram illustrating, in a simplified manner, an example of a setting screen regarding processing of setting an optimal execution condition.

FIG. 19 is a flowchart illustrating processing executed by the processing unit regarding processing of setting an optimal execution condition.

**Description of Embodiments**

(Finding underlying present disclosure)

In processing of optimizing a control parameter of a servomotor, at least one signal related to an operation of a system is acquired, an evaluation value is calculated using an evaluation function with respect to the acquired signal, and a control parameter is optimized by a parameter calculation method based on the calculated evaluation value.

Here, various known methods exist as evaluation function and parameter calculation methods, and optimal setting of an evaluation function and optimal selection of a parameter calculation method differ depending on a configuration of a system and a required performance item of a target device.

In the background art, setting of an evaluation function and selection of a parameter calculation method are fixed by the know-how of a skilled person, and a situation in which optimal setting and optimal selection are not necessarily performed may occur. As a result, time required for optimization processing may be prolonged, or drive performance of a target device may be insufficient because an optimal control parameter cannot be obtained.

In order to solve such a problem, the present inventor has found that an estimation model for estimating optimal setting of an evaluation function and optimal selection of a parameter calculation method can be generated based on configuration information of a system and required performance item information of a target device, and optimal setting of an evaluation function and optimal selection of a parameter calculation method can be estimated according to configuration information and required performance item information by using the estimation model, and has arrived at the present disclosure.

Next, each aspect of the present disclosure will be described.

An information processing method according to a first aspect of the present disclosure is an information processing method of generating an estimation model for setting an execution condition of optimization processing for a control parameter in a system including a servomotor, a target device driven by the servomotor, and a control device that controls an operation of the servomotor based on the control parameter, the optimization processing including acquiring at least one signal regarding an operation of the system, calculating an evaluation value by using an evaluation function for the at least one signal, and optimizing the control parameter by a parameter calculation method based on the evaluation value, the information processing method including acquiring, by an information processing device, training data including configuration information regarding a configuration of the system, required performance item information regarding a required performance item for an operation of the target device, setting information regarding setting of the evaluation function, calculation method selection information regarding selection of the parameter calculation method from among a plurality of parameter calculation methods, and evaluation information regarding an evaluation result of drive performance of the target device by the servomotor, and generating an estimation model that estimates at least one of optimal setting of the evaluation function and optimal selection of the parameter calculation method based on the configuration information and the required performance item information by machine learning using a plurality of pieces of training data.

According to the first aspect, the estimation model that estimates at least one of optimal setting of an evaluation function and optimal selection of a parameter calculation method based on configuration information and required performance item information can be generated by machine learning using a plurality of pieces of training data in a training phase. As a result, by using the estimation model in a use phase, at least one of optimal setting of an evaluation function and optimal selection of a parameter calculation method can be estimated according to configuration information and required performance item information.

In an information processing method according to a second aspect of the present disclosure, in the first aspect, the training data preferably further includes signal selection information regarding selection of the at least one signal, and the estimation model preferably further estimates optimal selection of the at least one signal.

According to the second aspect, as the training data further includes signal selection information, the estimation model for further estimating optimal selection of at least one signal can be generated.

In an information processing method according to a third aspect of the present disclosure, in the first or second aspect, the training data preferably further includes operation condition information regarding an operation condition of the optimization processing, and the estimation model preferably further estimates optimal setting of the operation condition.

According to the third aspect, as the training data further includes operation condition information, the estimation model for further estimating optimal setting of an operation condition can be generated.

In an information processing method according to a fourth aspect of the present disclosure, in the third aspect, the operation condition preferably includes at least one of maximum allowable execution time regarding execution time of the optimization processing and a maximum allowable number of executions regarding a number of operations of the target device in the optimization processing.

According to the fourth aspect, it is possible to generate the estimation model that further estimates at least one of maximum allowable execution time and a maximum allowable number of executions.

In an information processing method according to a fifth aspect of the present disclosure, in any one of the first to fourth aspects, the at least one signal preferably includes at least one of a command signal input to the control device for driving the servomotor, a detection signal indicating a detection value detected regarding an operation of the servomotor, and a detection signal indicating a detection value detected regarding an operation of the target device.

According to the fifth aspect, an evaluation value can be calculated using an evaluation function based on at least one of the command signal input to the control device for driving the servomotor, the detection signal indicating a detection value detected regarding an operation of the servomotor, and the detection signal indicating a detection value detected regarding an operation of the target device.

In an information processing method according to a sixth aspect of the present disclosure, in any one of the first to fifth aspects, the target device preferably includes a moving unit that moves by being driven by the servomotor, and the evaluation value preferably includes at least one of settling time until position deviation between a target position and a detection position of the moving unit converges to an allowable value or less, an integral value of the position deviation, and a maximum value of the position deviation.

According to the sixth aspect, a control parameter can be optimized by a parameter calculation method based on an evaluation value including at least one of settling time, an integral value of position deviation, and a maximum value of position deviation.

In an information processing method according to a seventh aspect of the present disclosure, in any one of the first to sixth aspects, the configuration information preferably includes at least one of an attribute of the servomotor and an attribute of the target device.

According to the seventh aspect, machine learning can be performed using the training data including at least one of an attribute of the servomotor and an attribute of the target device.

In an information processing method according to an eighth aspect of the present disclosure, in the seventh aspect, the attribute of the servomotor preferably includes at least one of a model number and specifications of the servomotor, and the attribute of the target device includes at least one of a model number and specifications of the target device.

According to the eighth aspect, machine learning can be performed using training data including at least one of a model number and specifications of the servomotor and/or at least one of a model number and specifications of the target device.

In an information processing method according to a ninth aspect of the present disclosure, in any one of the first to eighth aspects, the target device preferably includes a moving unit that moves by being driven by the servomotor, and the required performance item information preferably includes at least one of maximum allowable position deviation regarding position deviation between a target position and an arrival position of the moving unit and maximum allowable settling time regarding settling time until position deviation between a target position and a detection position of the moving unit converges to an allowable value or less.

According to the ninth aspect, machine learning can be performed using training data including at least one of maximum allowable position deviation and maximum allowable settling time.

In an information processing method according to a tenth aspect of the present disclosure, in any one of the first to ninth aspects, the evaluation information preferably includes at least one of a performance evaluation value input by an operator, a performance evaluation value derived based on a captured image obtained by capturing at least one operation of the servomotor and the target device, and a performance evaluation value derived based on a detection value detected for at least one operation of the servomotor and the target device.

According to the tenth aspect, machine learning can be performed using training data including at least one of a performance evaluation value input by an operator, a performance evaluation value derived based on a captured image, and a performance evaluation value derived based on a detection value.

In an information processing method according to an eleventh aspect of the present disclosure, in any one of the first to tenth aspects, the optimization processing preferably includes at least one of optimization processing by the servomotor driving the target device in a real space and optimization processing by the servomotor driving the target device by a simulation using a model of the system.

According to the eleventh aspect, a plurality of pieces of training data can be efficiently acquired, and the estimation model can be efficiently generated by machine learning using a plurality of pieces of training data.

An information processing method according to a twelfth aspect of the present disclosure is an information processing method of setting an execution condition of optimization processing for a control parameter in a system including a servomotor, a target device driven by the servomotor, and a control device that controls an operation of the servomotor based on the control parameter, the optimization processing including acquiring at least one signal regarding an operation of the system, calculating an evaluation value by using an evaluation function for the at least one signal, and optimizing the control parameter by a parameter calculation method based on the evaluation value, the information processing method including acquiring, by an information processing device, configuration information regarding a configuration of the system, and required performance item information regarding a required performance item for an operation of the target device, acquiring a machine-learned estimation model, the estimation model estimating at least one of optimal setting of the evaluation function and optimal selection of the parameter calculation method from among a plurality of parameter calculation methods based on the configuration information and the required performance item information, estimating the execution condition including at least one of optimal setting of the evaluation function and optimal selection of the parameter calculation method corresponding to the acquired configuration information and the acquired required performance item information by inputting the acquired configuration information and the acquired required performance item information to the estimation model, and outputting the execution condition.

According to the twelfth aspect, by using the estimation model in a use phase, it is possible to estimate an execution condition including at least one of optimal setting of an evaluation function and optimal selection of a parameter calculation method corresponding to acquired configuration information and required performance item information. Further, by outputting the estimated execution condition, an execution condition of control parameter optimization processing can be appropriately set.

In an information processing method according to a thirteenth aspect of the present disclosure, in the twelfth aspect, the estimation model preferably further estimates an optimal selection of the at least one signal, and the execution condition preferably further includes optimal selection of the at least one signal corresponding to the acquired configuration information and the acquired required performance item information.

According to the thirteenth aspect, it is possible to optimally select, from at least one signal, a signal used for calculation of an evaluation value.

In an information processing method according to a fourteenth aspect of the present disclosure, in the twelfth or thirteenth aspect, the estimation model preferably further estimates optimal setting of an operation condition of the optimization processing, and the execution condition preferably further includes optimal setting of the operation condition corresponding to the acquired configuration information and the acquired required performance item information.

According to the fourteenth aspect, an operation condition of the optimization processing can be optimally set.

In an information processing method according to a fifteenth aspect of the present disclosure, in the fourteenth aspect, the operation condition preferably includes at least one of maximum allowable execution time regarding execution time of the optimization processing and a maximum allowable number of executions regarding a number of operations of the target device in the optimization processing.

According to the fifteenth aspect, at least one of maximum allowable execution time and a maximum allowable number of executions can be optimally set.

In an information processing method according to a sixteenth aspect of the present disclosure, in any one of the twelfth to fifteenth aspects, the at least one signal preferably includes at least one of a command signal input to the control device for driving the servomotor, a detection signal indicating a detection value detected regarding an operation of the servomotor, and a detection signal indicating a detection value detected regarding an operation of the target device.

According to the sixteenth aspect, an evaluation value can be calculated using an evaluation function based on at least one of the command signal input to the control device for driving the servomotor, the detection signal indicating a detection value detected regarding an operation of the servomotor, and the detection signal indicating a detection value detected regarding an operation of the target device.

In an information processing method according to a seventeenth aspect of the present disclosure, in any one of the twelfth to sixteenth aspects, the target device preferably includes a moving unit that moves by being driven by the servomotor, and the evaluation value preferably includes at least one of settling time until position deviation between a target position and a detection position of the moving unit converges to an allowable value or less, an integral value of the position deviation, and a maximum value of the position deviation.

According to the seventeenth aspect, a control parameter can be optimized by a parameter calculation method based on an evaluation value including at least one of settling time, an integral value of position deviation, and a maximum value of position deviation.

In an information processing method according to an eighteenth aspect of the present disclosure, in any one of the twelfth to seventeenth aspects, the configuration information preferably includes at least one of an attribute of the servomotor and an attribute of the target device.

According to the eighteenth aspect, an optimal execution condition corresponding to at least one of an attribute of the servomotor and an attribute of the target device can be estimated.

In an information processing method according to a nineteenth aspect of the present disclosure, in the eighteenth aspect, the attribute of the servomotor preferably includes at least one of a model number and specifications of the servomotor, and the attribute of the target device preferably includes at least one of a model number and specifications of the target device.

According to the nineteenth aspect, an optimal execution condition corresponding to at least one of a model number and specifications of the servomotor and/or at least one of a model number and specifications of the target device can be estimated.

In an information processing method according to a twentieth aspect of the present disclosure, in any one of the twelfth to nineteenth aspects, the target device preferably includes a moving unit that moves by being driven by the servomotor, and the required performance item information preferably includes at least one of maximum allowable position deviation regarding position deviation between a target position and an arrival position of the moving unit and maximum allowable settling time regarding settling time until position deviation between a target position and a detection position of the moving unit converges to an allowable value or less.

According to the twentieth aspect, an optimal execution condition corresponding to at least one of maximum allowable position deviation and maximum allowable settling time can be estimated.

In an information processing method according to a twenty-first aspect of the present disclosure, in any one of the twelfth to twentieth aspects, the optimization processing preferably includes at least one of optimization processing by the servomotor driving the target device in a real space and optimization processing by the servomotor driving the target device by a simulation using a model of the system.

According to the twenty-first aspect, control parameter optimization processing can be efficiently executed.

An information processing method according to a twenty-second aspect of the present disclosure is an information processing method of generating an estimation model for setting an execution condition of optimization processing for a control parameter in a system including a servomotor, a target device driven by the servomotor, and a control device that controls an operation of the servomotor based on the control parameter, the optimization processing including acquiring at least one signal regarding an operation of the system, calculating an evaluation value by using an evaluation function for the at least one signal, and optimizing the control parameter by a parameter calculation method based on the evaluation value, the information processing method including displaying, by an information processing device, a setting screen, the setting screen including a configuration information display section in which configuration information regarding a configuration of the system is displayed, a required performance item information display section in which required performance item information regarding a required performance item for an operation of the target device is displayed, a setting information display section in which setting information regarding setting of the evaluation function is displayed, a calculation method selection information display section in which calculation method selection information regarding selection of the parameter calculation method from among a plurality of parameter calculation methods is displayed, and an evaluation information display section in which evaluation information regarding an evaluation result of drive performance of the target device by the servomotor is displayed, acquiring training data, the training data including the configuration information displayed in the configuration information display section, the required performance item information displayed in the required performance item information display section, the setting information displayed in the setting information display section, the calculation method selection information displayed in the calculation method selection information display section, and the evaluation information displayed in the evaluation information display section, and generating an estimation model that estimates at least one of optimal setting of the evaluation function and optimal selection of the parameter calculation method based on the configuration information and the required performance item information by machine learning using a plurality of pieces of training data.

According to the twenty-second aspect, the estimation model that estimates at least one of optimal setting of an evaluation function and optimal selection of a parameter calculation method based on configuration information and required performance item information can be generated by machine learning using a plurality of pieces of training data in a training phase. As a result, by using the estimation model in a use phase, at least one of optimal setting of an evaluation function and optimal selection of a parameter calculation method can be estimated according to configuration information and required performance item information.

An information processing method according to a twenty-third aspect of the present disclosure is an information processing method of setting an execution condition of optimization processing for a control parameter in a system including a servomotor, a target device driven by the servomotor, and a control device that controls an operation of the servomotor based on the control parameter, the optimization processing including acquiring at least one signal regarding an operation of the system, calculating an evaluation value by using an evaluation function for the at least one signal, and optimizing the control parameter by a parameter calculation method based on the evaluation value, the information processing method including displaying, by an information processing device, a setting screen including an input section and an output section, the input section including a configuration information input section to which configuration information regarding a configuration of the system is input, and a required performance item information input section to which required performance item information regarding a required performance item for an operation of the target device is input, acquiring the configuration information input to the configuration information input section and the required performance item information input to the required performance item information input section, acquiring a machine-learned estimation model, the estimation model estimating at least one of optimal setting of the evaluation function and optimal selection of the parameter calculation method from among a plurality of parameter calculation methods based on the configuration information and the required performance item information, estimating the execution condition including at least one of optimal setting of the evaluation function and optimal selection of the parameter calculation method corresponding to the acquired configuration information and the acquired required performance item information by inputting the acquired configuration information and the acquired required performance item information to the estimation model, and displaying, in the output section, at least one of optimal setting of the evaluation function and optimal selection of the parameter calculation method.

According to the twenty-third aspect, by using the estimation model in a use phase, it is possible to estimate an execution condition including at least one of optimal setting of an evaluation function and optimal selection of a parameter calculation method corresponding to acquired configuration information and required performance item information. In addition, by displaying at least one of the optimal setting of the evaluation function and the optimal selection of the parameter calculation method in the output section of the setting screen, the operator can confirm the optimal execution condition of the optimization processing.

An information processing device according to a twenty-fourth aspect of the present disclosure is an information processing device that generates an estimation model for setting an execution condition of optimization processing for a control parameter in a system including a servomotor, a target device driven by the servomotor, and a control device that controls an operation of the servomotor based on the control parameter, the optimization processing including acquiring at least one signal regarding an operation of the system, calculating an evaluation value by using an evaluation function for the at least one signal, and optimizing the control parameter by a parameter calculation method based on the evaluation value, the information processing device including acquiring training data including configuration information regarding a configuration of the system, required performance item information regarding a required performance item for an operation of the target device, setting information regarding setting of the evaluation function, calculation method selection information regarding selection of the parameter calculation method from among a plurality of parameter calculation methods, and evaluation information regarding an evaluation result of drive performance of the target device by the servomotor, and generating an estimation model that estimates at least one of optimal setting of the evaluation function and optimal selection of the parameter calculation method based on the configuration information and the required performance item information by machine learning using a plurality of pieces of training data.

According to the twenty-fourth aspect, the estimation model that estimates at least one of optimal setting of an evaluation function and optimal selection of a parameter calculation method based on configuration information and required performance item information can be generated by machine learning using a plurality of pieces of training data in a training phase. As a result, by using the estimation model in a use phase, at least one of optimal setting of an evaluation function and optimal selection of a parameter calculation method can be estimated according to configuration information and required performance item information.

An information processing device according to a twenty-fifth aspect of the present disclosure is an information processing device that sets an execution condition of optimization processing for a control parameter in a system including a servomotor, a target device driven by the servomotor, and a control device that controls an operation of the servomotor based on the control parameter, the optimization processing including acquiring at least one signal regarding an operation of the system, calculating an evaluation value by using an evaluation function for the at least one signal, and optimizing the control parameter by a parameter calculation method based on the evaluation value, the information processing device including acquiring configuration information regarding a configuration of the system, and required performance item information regarding a required performance item for an operation of the target device, acquiring a machine-learned estimation model, the estimation model estimating at least one of optimal setting of the evaluation function and optimal selection of the parameter calculation method from among a plurality of parameter calculation methods based on the configuration information and the required performance item information, estimating the execution condition including at least one of optimal setting of the evaluation function and optimal selection of the parameter calculation method corresponding to the acquired configuration information and the acquired required performance item information by inputting the acquired configuration information and the acquired required performance item information to the estimation model, and outputting the execution condition.

According to the twenty-fifth aspect, by using the estimation model in a use phase, it is possible to estimate an execution condition including at least one of optimal setting of an evaluation function and optimal selection of a parameter calculation method corresponding to acquired configuration information and required performance item information. Further, by outputting the estimated execution condition, an execution condition of control parameter optimization processing can be appropriately set.

A program according to a twenty-sixth aspect of the present disclosure is a program for causing an information processing device to execute information processing, the information processing device generating an estimation model for setting an execution condition of optimization processing for a control parameter in a system including a servomotor, a target device driven by the servomotor, and a control device that controls an operation of the servomotor based on the control parameter, the optimization processing including acquiring at least one signal regarding an operation of the system, calculating an evaluation value by using an evaluation function for the at least one signal, and optimizing the control parameter by a parameter calculation method based on the evaluation value, the information processing including acquiring training data including configuration information regarding a configuration of the system, required performance item information regarding a required performance item for an operation of the target device, setting information regarding setting of the evaluation function, calculation method selection information regarding selection of the parameter calculation method from among a plurality of parameter calculation methods, and evaluation information regarding an evaluation result of drive performance of the target device by the servomotor, and generating an estimation model that estimates at least one of optimal setting of the evaluation function and optimal selection of the parameter calculation method based on the configuration information and the required performance item information by machine learning using a plurality of pieces of training data.

According to the twenty-sixth aspect, the estimation model that estimates at least one of optimal setting of an evaluation function and optimal selection of a parameter calculation method based on configuration information and required performance item information can be generated by machine learning using a plurality of pieces of training data in a training phase. As a result, by using the estimation model in a use phase, at least one of optimal setting of an evaluation function and optimal selection of a parameter calculation method can be estimated according to configuration information and required performance item information.

A program according to a twenty-seventh aspect of the present disclosure is a program for causing an information processing device to execute information processing, the information processing device setting an execution condition of optimization processing for a control parameter in a system including a servomotor, a target device driven by the servomotor, and a control device that controls an operation of the servomotor based on the control parameter, the optimization processing including acquiring at least one signal regarding an operation of the system, calculating an evaluation value by using an evaluation function for the at least one signal, and optimizing the control parameter by a parameter calculation method based on the evaluation value, the information processing including acquiring configuration information regarding a configuration of the system, and required performance item information regarding a required performance item for an operation of the target device, acquiring a machine-learned estimation model, the estimation model estimating at least one of optimal setting of the evaluation function and optimal selection of the parameter calculation method from among a plurality of parameter calculation methods based on the configuration information and the required performance item information, estimating the execution condition including at least one of optimal setting of the evaluation function and optimal selection of the parameter calculation method corresponding to the acquired configuration information and the acquired required performance item information by inputting the acquired configuration information and the acquired required performance item information to the estimation model, and outputting the execution condition.

According to the twenty-seventh aspect, by using the estimation model in a use phase, it is possible to estimate an execution condition including at least one of optimal setting of an evaluation function and optimal selection of a parameter calculation method corresponding to acquired configuration information and required performance item information. Further, by outputting the estimated execution condition, an execution condition of control parameter optimization processing can be appropriately set.

The present disclosure may also be implemented as a program that causes a computer to perform each characteristic configuration included in the method or the device as described above, or a system that operates with the program. Further, needless to say, such a computer program can be distributed via a computer-readable non-transitory recording medium such as a CD-ROM or via a communication network such as the Internet.

(Embodiment of present disclosure)

An embodiment of the present disclosure will be described in detail below with reference to the drawings. Note that elements denoted by the same reference signs in different drawings represent the same or corresponding elements. Further, components, arrangement positions of the components, connection forms, the order of operations, and the like shown in the following embodiment are one example, and are not intended to limit the present disclosure. The present disclosure is limited only by the claims. Therefore, a component that is not described in an independent claim indicating the most generic concept of the present disclosure among components in the following embodiment is not necessarily required to achieve the object of the present disclosure, but the component is described as constituting a more preferable form.

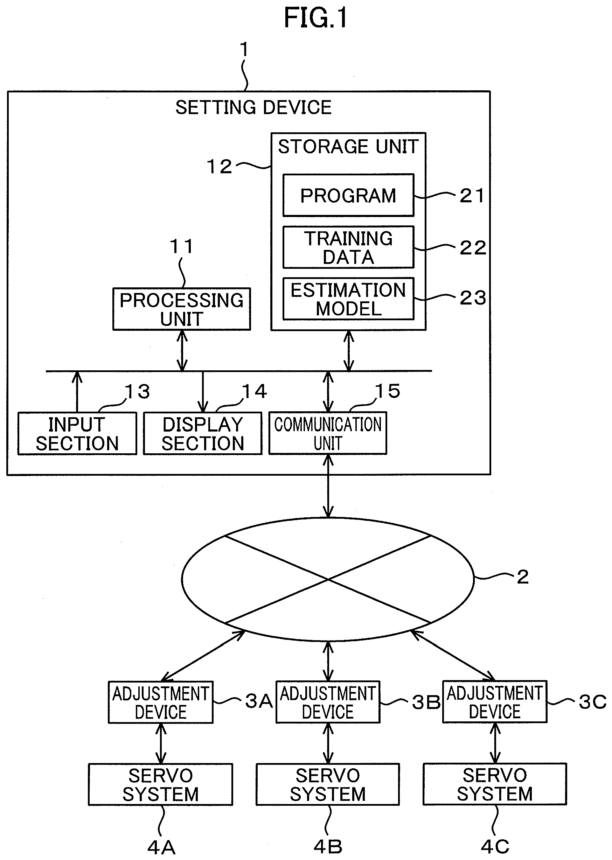

FIG. 1 is a diagram illustrating, in a simplified manner, an overall configuration of a servo control system according to an embodiment of the present disclosure. The servo control system includes a setting device 1, a communication network 2, a plurality of adjustment devices 3, and a plurality of servo systems 4. In the example illustrated in FIG. 1, the servo control system includes three sets of adjustment devices 3A to 3C and servo systems 4A to 4C. The setting device 1 and the adjustment devices 3A to 3C are connected to the communication network 2. The communication network 2 may be a dedicated line network or a public line network.

Each set of the adjustment devices 3A to 3C and the servo systems 4A to 4C is installed, for example, in different factories. The setting device 1 may be configured using a cloud server, may be configured using a computer different from the adjustment devices 3A to 3C, or may be configured as a computer that shares hardware with any of the adjustment devices 3A to 3C. The setting device 1 is installed in the same factory as the adjustment device 3A and the servo system 4A, for example, and is configured as a computer that shares hardware with the adjustment device 3A.

The setting device 1 includes a processing unit 11, a storage unit 12, an input section 13, a display section 14, and a communication unit 15. The processing unit 11 includes a processor (information processing device) such as a CPU. The storage unit 12 includes any storage device such as an HDD, an SSD, or a semiconductor memory. The input section 13 includes any input device such as a mouse, a keyboard, or a touch panel. The display section 14 includes any display device such as a liquid crystal display or an organic EL display. The communication unit 15 includes a communication module compliant with a communication standard for the communication network 2.

The storage unit 12 stores a program 21, training data 22, and an estimation model 23. The storage unit 12 includes a computer-readable non-volatile storage medium. The program 21 is stored in the storage medium.

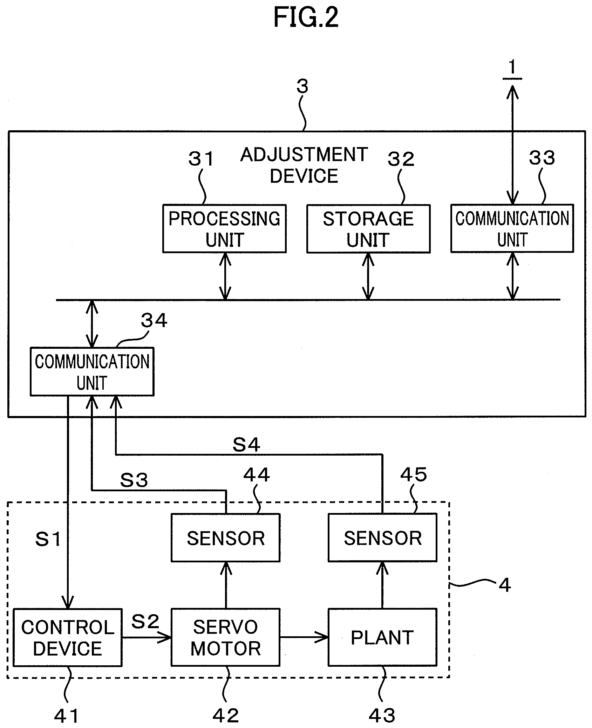

FIG. 2 is a diagram illustrating, in a simplified manner, a configuration of the adjustment device 3 and the servo system 4. The adjustment device 3 includes a processing unit 31, a storage unit 32, and communication units 33 and 34. The processing unit 31 includes a processor such as a CPU. The storage unit 32 includes any storage device such as an HDD, an SSD, or a semiconductor memory. The communication unit 33 includes a communication module compliant with a communication standard for the communication network 2. The communication unit 34 includes a communication module compliant with a communication standard for the servo system 4.

The servo system 4 includes a control device 41, a servomotor 42, a plant 43, and sensors 44 and 45. The control device 41 includes a servo amplifier that controls an operation of the servomotor 42. The control device 41 controls an operation of the servomotor 42 by a control signal S2 based on a command signal S1 such as a position command, a speed command, or a torque command input from the adjustment device 3. The plant 43 is a target device driven by the servomotor 42. The target device is, for example, a mounting machine such as a pick and place device. The sensor 44 includes a rotary encoder and the like, and outputs a detection signal S3 indicating a detection value detected regarding an operation of the servomotor 42. The detection value indicated by the detection signal S3 includes a rotational speed, a rotational position, a rotational speed, or the like. The sensor 45 includes a laser displacement meter and the like, and outputs a detection signal S4 indicating a detection value detected regarding an operation of the plant 43. The detection value indicated by the detection signal S4 includes a detection position of a suction nozzle included in a pick and place device. The suction nozzle is an example of a moving unit that moves by being driven by the servomotor 42.

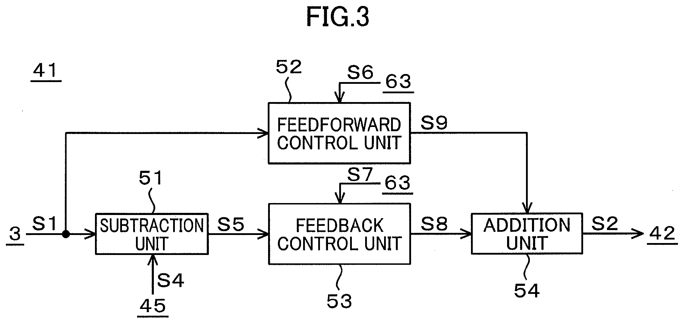

FIG. 3 is a diagram illustrating, in a simplified manner, an example of a configuration of the control device 41. The control device 41 includes a subtraction unit 51, a feedforward control unit 52, a feedback control unit 53, and an addition unit 54. The feedforward control unit 52 outputs a control signal S9 based on the command signal S1. Based on the command signal S1 and the detection signal S4, the subtraction unit 51 generates and outputs a position deviation signal S5 indicating position deviation that is a difference between a command position and a detection position. The feedback control unit 53 outputs a control signal S8 based on the position deviation signal S5. The addition unit 54 adds the control signal S9 input from the feedforward control unit 52 and the control signal S8 input from the feedback control unit 53 to generate and output the control signal S2. The feedforward control unit 52 and the feedback control unit 53 respectively receive control parameters S6 and S7 from a control parameter calculation unit 63 to be described later. For example, a gain or the like in the feedforward control unit 52 is set by the control parameter S6, and a gain or the like in the feedback control unit 53 is set by the control parameter S7. Note that the feedforward control unit 52 may be omitted.

The adjustment device 3 searches for an optimal control parameter by automatic adjustment processing (optimization processing) for the control parameters S6 and S7 of the servomotor 42.

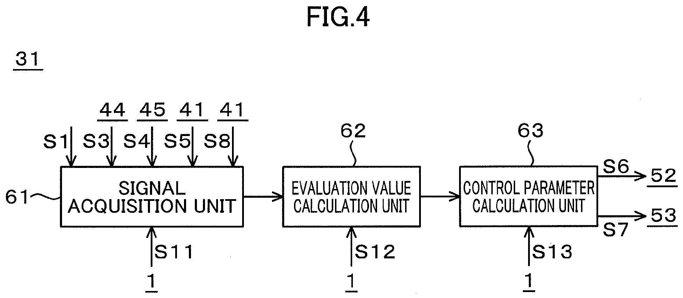

FIG. 4 is a diagram illustrating, in a simplified manner, a functional configuration of the processing unit 31 related to optimization processing. The processing unit 31 includes a signal acquisition unit 61, an evaluation value calculation unit 62, and a control parameter calculation unit 63.

The signal acquisition unit 61 acquires at least one signal related to an operation of the servo system 4. In the example illustrated in FIG. 4, the acquired at least one signal includes the command signal S1, the detection signal S3 input from the sensor 44, the detection signal S4 input from the sensor 45, the position deviation signal S5 input from the control device 41, and the control signal S8 input from the control device 41. Further, a selection signal S11 is input from the setting device 1 to the signal acquisition unit 61. The signal acquisition unit 61 selects at least one signal from among the acquired command signal S1, detection signals S3 and S4, position deviation signal S5, and control signal S8 based on the selection signal S11, and inputs the selected at least one signal to the evaluation value calculation unit 62.

The evaluation value calculation unit 62 calculates an evaluation value by using an evaluation function for at least one signal input from the signal acquisition unit 61. Further, a setting signal S12 is input from the setting device 1 to the evaluation value calculation unit 62. The evaluation value calculation unit 62 sets an evaluation function based on the setting signal S12.

The evaluation value calculation unit 62 can set, for example, the following evaluation function.

$$Ts(p, n) \quad (1)$$

An evaluation value calculated using the evaluation function expressed by Formula (1) is settling time Ts(p, n). Here, p and n are thresholds that define a settling range.

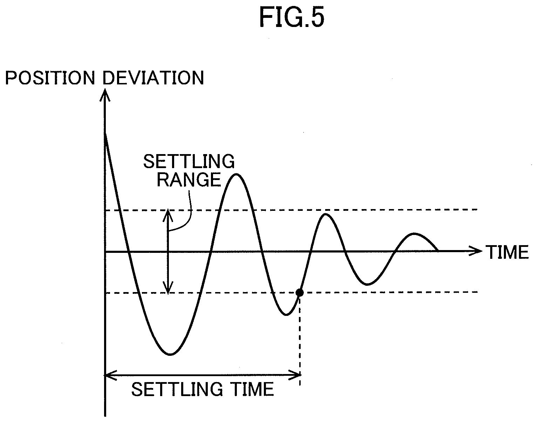

FIG. 5 is a diagram for explaining settling time and a settling range. The horizontal axis represents time, and the vertical axis represents a position deviation with respect to a target position. The evaluation value calculation unit 62 creates waveform data illustrated in FIG. 5 based on the position deviation signal S5. A moving unit such as a suction nozzle reaches a target position while repeatedly undergoing overshoot and undershoot that gradually converge. The overshoot corresponds to a region surrounded by a time axis and a waveform below the time axis. The undershoot corresponds to a region surrounded by a time axis and a waveform above the time axis. As illustrated in FIG. 5, the settling time means an elapsed time from time when a stop signal for stopping driving of a moving unit is output to time when the moving unit reaches an allowable range where it can be evaluated that the moving unit reaches a target position. The allowable range is defined by a settling range.

[Formula 1]

$$S1 = \int |e(t)| dt \quad (2)$$

Here, e(t) is position deviation at time t and is indicated by the position deviation signal S5. An evaluation value calculated using the evaluation function expressed by Formula (2) is an area S1. The area S1 corresponds to a total value of an area of a region surrounded by a waveform and a time axis illustrated in FIG. 5, and is calculated as an integral value of absolute values of the position deviation e(t).

[Formula 2]

$$S2 = \int |e(t)|^2 dt \quad (3)$$

An evaluation value calculated using the evaluation function expressed by Formula (3) is an area S2. The area S2 is calculated as an integral value of the squares of absolute values of the position deviation e(t).

[Formula 3]

$$P = \max(|e(t)|) \quad (4)$$

An evaluation value calculated using the evaluation function expressed by Formula (4) is an amplitude maximum value P. The amplitude maximum value P is calculated as a maximum value of an absolute value of the position deviation e(t).

$$C1 = w0 \times Ts(p, n) + w1 \times S1 + w2 \times P \quad (5)$$

An evaluation value calculated using the evaluation function expressed by Formula (5) is weighted sum of the settling time Ts(p, n), the area S1, and the amplitude maximum value P. Here, w0 to w2 are weighting coefficients.

$$C2 = w3 \times S1 + w4 \times dI(t)/dt \quad (6)$$

An evaluation value calculated using the evaluation function expressed by Formula (6) is weighted sum of the area S1 and time derivative of motor current I(t). Here, w3 and w4 are weighting coefficients.

$$Q = a0 \times S1 + a1 \times e(t) + a2 \times de(t)/dt + a3 \times d^2e(t)/dt^2 \quad (7)$$

An evaluation value calculated using the evaluation function expressed by Formula (7) is polynomial sum of the area S1, a proportional term of the position deviation e(t), a first derivative term of the position deviation e(t), and a second derivative term of the position deviation e(t). Here, a0 to a3 are coefficients of each term.

[Formula 4]

$$V = \int |ve(t)| dt \quad (8)$$

An evaluation value calculated using the evaluation function expressed by Formula (8) is an area V. The area V is calculated as an integral value of absolute values of the velocity deviation ve(t). The velocity deviation ve(t) is a difference between a command speed and a detection speed.

$$FB = FB(t) \quad (9)$$

An evaluation value calculated using the evaluation function expressed by Formula (9) is a feedback control value FB expressed by the control signal S8 output from the feedback control unit 53.

$$Pdiff[n] = r[n] - r[n + 1] \quad (10)$$

An evaluation value calculated using the evaluation function expressed by Formula (10) is an attenuation amount Pdiff[n] of a peak value r[n] of the position deviation e(t).

$$Pslope[n] = Pdiff[n]/(t[n + 1] - t[n]) \quad (11)$$

An evaluation value calculated using the evaluation function expressed by Formula (11) is an attenuation rate Pslope[n] of the peak value r[n] of the position deviation e(t).

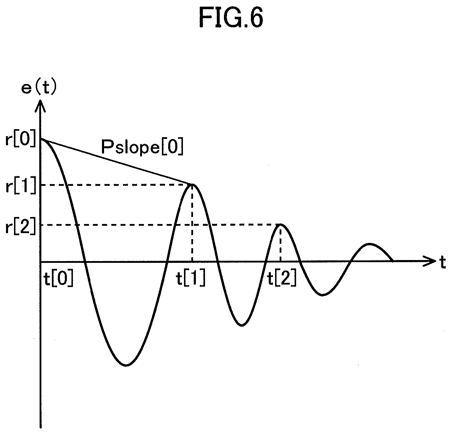

FIG. 6 is a diagram for explaining an attenuation amount and an attenuation rate of a peak value of position deviation. The horizontal axis represents time t, and the vertical axis represents position deviation e(t) with respect to a target position. A difference between peak value r[0] at time t[0] and a peak value r[1] at the time t[1] is an attenuation amount Pdiff[0]. Further, a slope of a straight line connecting a peak at time t[0] and a peak at time t[1] is an attenuation rate Pslope[0].

The evaluation value calculation unit 62 sets an evaluation function to be used from among a plurality of the evaluation functions and values of the weighting coefficients w0 to w4 and the coefficients a0 to a3 based on the setting signal S12.

Referring to FIG. 4, the control parameter calculation unit 63 optimizes the control parameters S6 and S7 by a parameter calculation method based on an evaluation value input from the evaluation value calculation unit 62. For example, in a case where the evaluation value is settling time, the control parameter calculation unit 63 searches for the optimal control parameters S6 and S7 that minimize the settling time. As a parameter calculation method for optimization, a known algorithm such as a Bayesian optimization algorithm, an evolutionary strategy algorithm (CMA-ES), or a genetic algorithm (GA) can be used. Further, the parameter calculation method for optimization may include a rule-based calculation formula. A selection signal S13 is input from the setting device 1 to the control parameter calculation unit 63. The control parameter calculation unit 63 selects a parameter calculation method based on the selection signal S13.

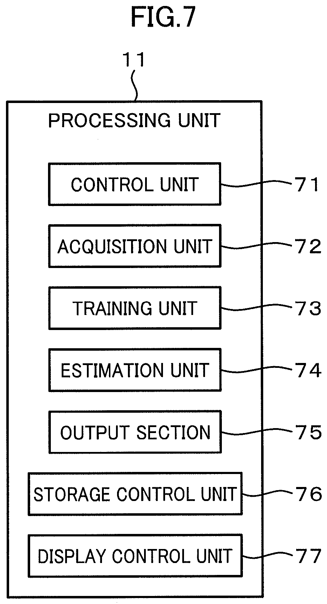

FIG. 7 is a diagram illustrating, in a simplified manner, a functional configuration of the processing unit 11 related to processing of setting an execution condition of optimization processing. The processing unit 11 executes the program 21 read from the storage unit 12, so that the functional configuration illustrated in FIG. 7 is implemented. The processing unit 11 includes a control unit 71, an acquisition unit 72, a training unit 73, an estimation unit 74, an output section 75, a storage control unit 76, and a display control unit 77. Details of processing content in each unit will be described later.

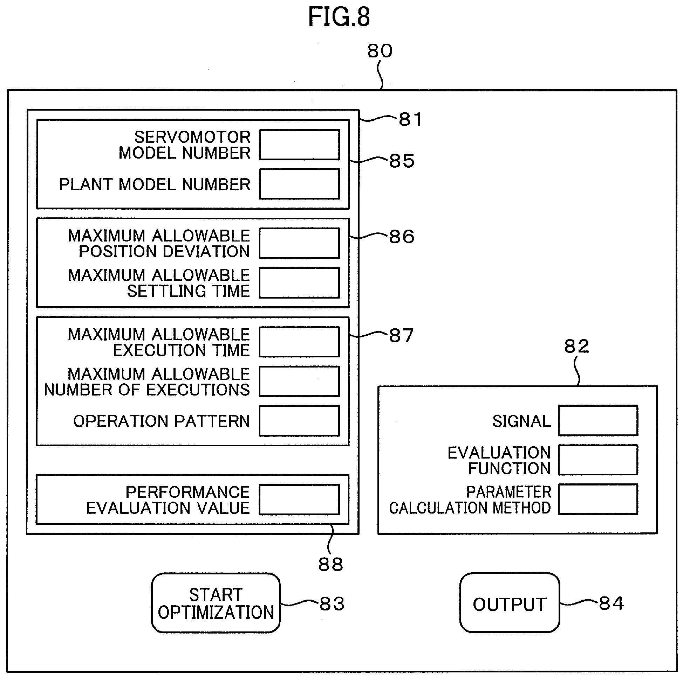

FIG. 8 is a diagram illustrating, in a simplified manner, an example of a setting screen 80 regarding processing of generating training data. The display control unit 77 creates the setting screen 80 and displays the setting screen on the display section 14.

The setting screen 80 includes an input section 81, an output section 82, an icon 83 for instructing start of execution of optimization processing, and an icon 84 for instructing data output.

The input section 81 includes a plurality of input fields 85 to 88.

Configuration information related to a configuration of the servo system 4 is input to the input field 85 by operation of the input section 13 by an operator. The input field 85 includes an item to which a model number of the servomotor 42 is input as an attribute of the servomotor 42 and an item to which a model number of the plant 43 is input as an attribute of the plant 43. Note that, as attributes of the servomotor 42 and the plant 43, specifications may be input instead of a model number. The specifications include rated output capacity, rated rotation speed, and the like. By this, even if model numbers are not the same, a plurality of types of the servomotors 42 or a plurality of types of the plants 43 having common specifications can be collectively treated to be in the same classification having common attributes.

Required performance item information regarding a required performance item for an operation of the plant 43 is input to the input field 86 by operation of the input section 13 by an operator. The input field 86 includes an item to which maximum allowable position deviation regarding position deviation between a target position and an arrival position of a moving unit is input and an item to which maximum allowable settling time regarding settling time is input.

Operation condition information regarding an operation condition of optimization processing is input to the input field 87 by operation of the input section 13 by the operator. The input field 87 includes an item to which maximum allowable execution time regarding execution time of optimization processing is input, an item to which maximum allowable number of executions regarding the number of operations of the plant 43 in the optimization processing is input, and an item to which an operation pattern of the servomotor 42 in the optimization processing is input.

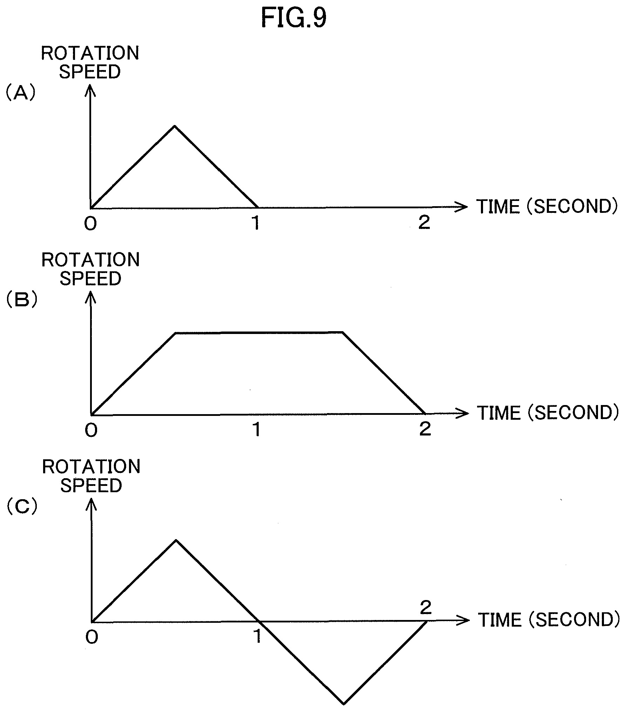

FIG. 9 is a diagram illustrating various operation patterns of the servomotor 42. The horizontal axis represents time, and the vertical axis represents rotation speed. In optimization processing, various operation patterns as illustrated in (A) to (C) of FIG. 9 can be set, and information specifying one or a plurality of operation patterns selected by an operator is input to the input field 87.

Note that input of information to the input fields 85 to 87 may be performed by selection from a setting list such as a data file stored in advance in the storage unit 12, instead of operation input by an operator.

Referring to FIG. 8, evaluation information regarding an evaluation result of drive performance of the plant 43 by the servomotor 42 is input to the input field 88. The evaluation information includes, for example, a performance evaluation value normalized to a range from the minimum value 0.0 to the maximum value 10.0.

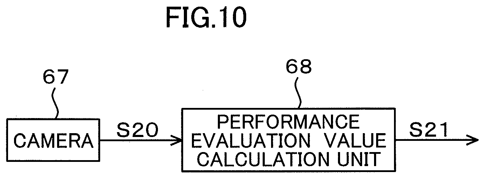

FIG. 10 is a diagram illustrating a first example of generation of evaluation information. The servo system 4 includes a camera 67 that captures an image of operation of the servomotor 42 or the plant 43. The processing unit 11 includes a performance evaluation value calculation unit 68. The camera 67 inputs image data S20 of a captured image to the performance evaluation value calculation unit 68. The performance evaluation value calculation unit 68 calculates a performance evaluation value by analyzing the image data S20 by using a predetermined image recognition algorithm, and outputs evaluation information S21 including the calculated performance evaluation value. The display control unit 77 displays performance evaluation value included in the evaluation information S21 in the input field 88. For example, the performance evaluation value calculation unit 68 derives a higher performance evaluation value as an operation is smoother, as an operation is faster, or as vibration of an operation is smaller. Note that the servo system 4 may include a microphone in addition to the camera 67, and in this case, the performance evaluation value calculation unit 68 may calculate a performance evaluation value in consideration of magnitude of noise and the like associated with an operation.

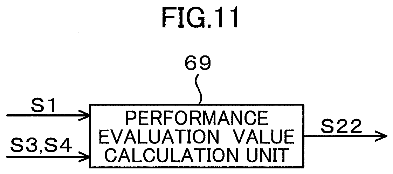

FIG. 11 is a diagram illustrating a second example of generation of evaluation information. The processing unit 11 includes a performance evaluation value calculation unit 69. The performance evaluation value calculation unit 69 calculates a performance evaluation value based on the command signal S1 and the detection signals S3 and S4, and outputs evaluation information S22 including a calculated performance evaluation value. The display control unit 77 displays a performance evaluation value included in the evaluation information S22 in the input field 88. For example, the performance evaluation value calculation unit 69 derives a higher performance evaluation value as a difference between the command signal S1 and the detection signals S3 and S4 is smaller.

As a third example of the generation of evaluation information, an operator may visually observe an operation of the servomotor 42 or the plant 43 and derive a performance evaluation value based on an evaluation result of the operation. An operator who evaluates an operation is desirably a skilled person having evaluation know-how. For example, an operator derives a higher performance evaluation value as an operation is smoother, as an operation is faster, as vibration of an operation is smaller, or as noise accompanying an operation is smaller. The performance evaluation value is input by an operator operating the input section 13, and the display control unit 77 displays the input performance evaluation value in the input field 88. Note that an image recognition algorithm used by the performance evaluation value calculation unit 68 in the first example may be an algorithm reflecting evaluation know-how of a skilled operator.

Referring to FIG. 8, when the icon 83 is selected by a click operation, a tap operation, or the like of an operator, optimization processing based on a condition input to the input section 81 is started.

When the optimization processing is completed, the display control unit 77 displays information on the output section 82. The output section 82 includes an item for displaying optimal selection of at least one signal in the signal acquisition unit 61, an item for displaying optimal setting of an evaluation function in the evaluation value calculation unit 62, and an item for displaying optimal selection of a parameter calculation method in the control parameter calculation unit 63.

When the icon 84 is selected by a click operation, a tap operation, or the like of an operator, training data including information displayed on the input section 81 and the output section 82 is additionally registered in a database of the training data 22 held in the storage unit 12.

Note that the optimization processing is not limited to optimization processing in which the servomotor 42 drives the plant 43 in a real space, and may be optimization processing in which a model of the servo system 4 is constructed in a virtual space on a computer by using a digital twin technology or the like, and the servomotor 42 drives the plant 43 by simulation using the model.

(Processing of generating training data)

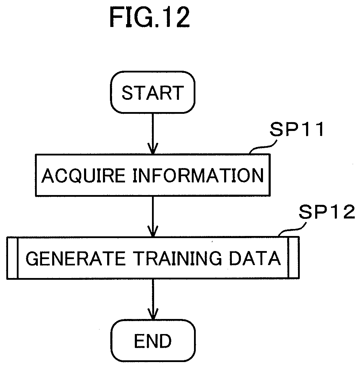

FIG. 12 is a flowchart illustrating a first example of processing executed by the processing unit 11 regarding processing of generating training data.

First, in Step SP11, the acquisition unit 72 acquires configuration information input in the input field 85 of the setting screen 80, required performance item information input in the input field 86, and operation condition information input in the input field 87. Further, the acquisition unit 72 acquires information regarding at least one signal that can be acquired by the signal acquisition unit 61, information regarding a plurality of evaluation functions that can be set by the evaluation value calculation unit 62, and information regarding a plurality of parameter calculation methods that can be selected by the control parameter calculation unit 63.

Next, in Step SP12, the control unit 71 generates training data based on the information acquired in Step SP11.

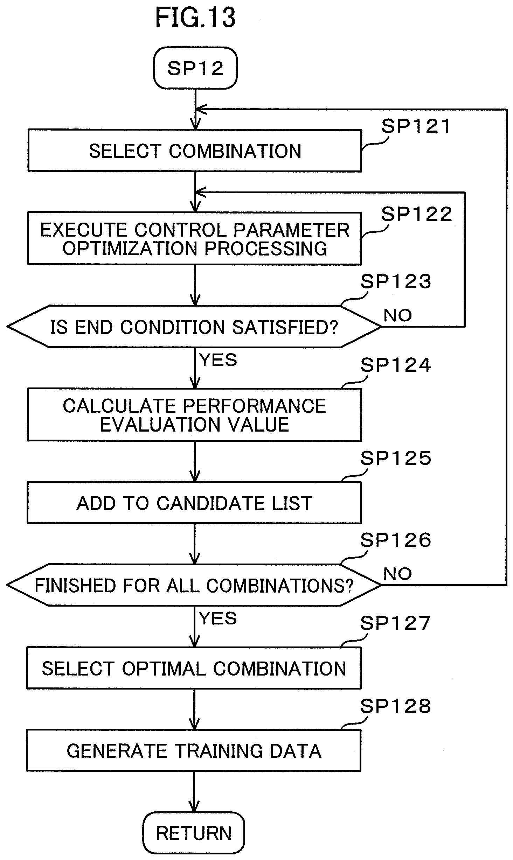

FIG. 13 is a flowchart illustrating details of processing of generating training data in Step SP12.

First, in Step SP121, the control unit 71 selects one combination for at least one signal that can be acquired by the signal acquisition unit 61, a plurality of evaluation functions that can be set by the evaluation value calculation unit 62, and a plurality of parameter calculation methods that can be selected by the control parameter calculation unit 63. For at least one signal that can be acquired by the signal acquisition unit 61, a signal to be used in a selected evaluation function is selected.

Next, in Step SP122, the control unit 71 causes the adjustment device 3 to execute control parameter optimization processing based on the configuration information, the required performance item information, and the operation condition information input in the input fields 85 to 87 and information regarding the combination selected in Step SP121. The information regarding a combination includes signal selection information (the selection signal S11) regarding selection of at least one signal in the signal acquisition unit 61, setting information (the setting signal S12) regarding setting of an evaluation function in the evaluation value calculation unit 62, and calculation method selection information (the selection signal S13) regarding selection of a parameter calculation method in the control parameter calculation unit 63. The processing unit 31 causes the servomotor 42 to execute one operation by the command signal S1. Further, the processing unit 31 executes control parameter optimization processing for the combination selected in Step SP121 based on the selection signal S11, the setting signal S12, and the selection signal S13.

Next, in Step SP123, the control unit 71 determines whether or not an end condition of optimization processing is satisfied for a current combination. For example, the control unit 71 determines that the end condition is satisfied as settling time is minimized.

In a case of determining that the end condition is not satisfied (Step SP123: NO), the control unit 71 repeatedly executes the processing of Step SP122 and subsequent steps.

In a case where it is determined that the end condition is satisfied (Step SP123: YES), next, in Step SP124, the performance evaluation value calculation unit 68 calculates a performance evaluation value for the current combination. The performance evaluation value may be calculated by the performance evaluation value calculation unit 69 or may be input by operation of the input section 13 by an operator.

Next, in Step SP125, the control unit 71 additionally registers, in a candidate list held by the storage unit 12, candidate data of training data including the configuration information, the required performance item information, and the operation condition information input in the input fields 85 to 87, the signal selection information, the setting information, and the calculation method selection information regarding the current combination, and the evaluation information including the performance evaluation value.

Next, in Step SP126, the control unit 71 determines whether or not the processing in Steps SP121 to SP125 is completed for all combinations of at least one signal that can be acquired by the signal acquisition unit 61, a plurality of evaluation functions that can be set by the evaluation value calculation unit 62, and a plurality of parameter calculation methods that can be selected by the control parameter calculation unit 63.

In a case where there is a combination for which the processing has not yet been executed (Step SP126: NO), the control unit 71 repeatedly executes the processing in Step SP121 and subsequent steps for the combination for which the processing has not yet been executed.

In a case where the processing is completed for all the combinations (Step SP126: YES), next, in Step SP127, the control unit 71 selects an optimal combination having a maximum performance evaluation value from a plurality of combinations registered in the candidate list.

Next, in Step SP128, the control unit 71 generates candidate data corresponding to the optimal combination selected in Step SP127 as training data. The storage control unit 76 additionally registers the generated training data in a database of the training data 22 held in the storage unit 12. Further, the display control unit 77 displays a selected signal, a set evaluation function, and a selected parameter calculation method in the optimal combination in the output section 82 of the setting screen 80.

Note that all candidate data may be generated as training data by omitting Step SP127. By this, machine learning by the training unit 73 can be executed by using more training data, so that improvement in estimation accuracy can be expected. However, at an initial stage of machine learning, it is preferable to use training data regarding a selected optimal combination by executing Step SP127. By this, it is possible to avoid a situation in which an effect of training cannot be sufficiently obtained in the initial stage where an amount of training data is small.

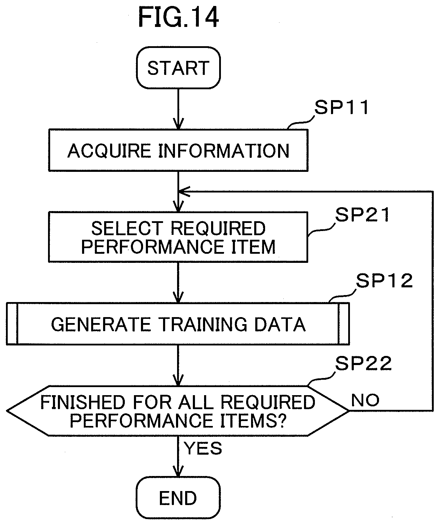

FIG. 14 is a flowchart illustrating a second example of processing executed by the processing unit 11 regarding processing of generating training data. Hereinafter, a difference from the first example illustrated in FIG. 12 will be mainly described.

In the second example, a plurality of required performance items are set as required performance items for an operation of the plant 43. For example, a plurality of sets of maximum allowable position deviation and maximum allowable settling time are set.

In Step SP21 subsequent to Step SP11, the control unit 71 selects one required performance item from a plurality of required performance items.

Next, in Step SP12, the control unit 71 generates training data based on the information acquired in Step SP11 and the required performance item selected in Step SP21. In Step SP122, the control unit 71 causes the adjustment device 3 to execute control parameter optimization processing based on the configuration information and the operation condition information input to the input fields 85 and 87, the required performance item selected in Step SP21 among a plurality of required performance items input to the input field 86, and information on the combination selected in Step SP121.

Next, in Step SP22, the control unit 71 determines whether or not the processing in Steps SP21 and SP12 is completed for all the required performance items.

In a case where there is a required performance item for which the processing has not yet been executed (Step SP22: NO), the control unit 71 repeatedly executes the processing of Steps SP21 and SP12 for the required performance item for which the processing has not yet been executed.

In a case where the processing is completed for all the required performance items (Step SP22: YES), the control unit 71 ends the processing of generating training data.

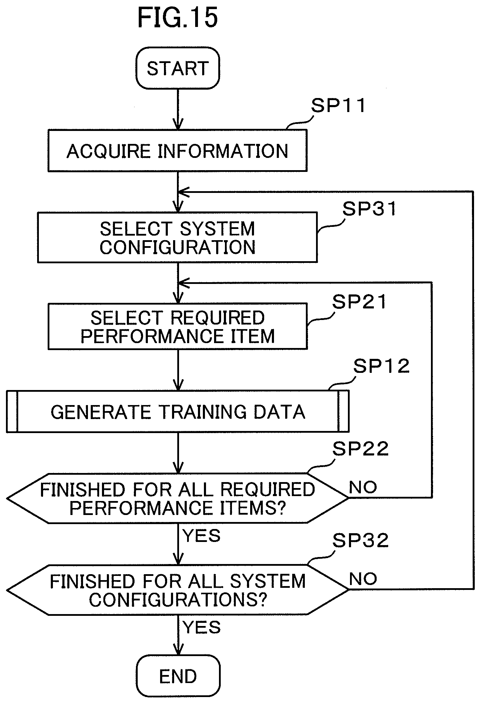

FIG. 15 is a flowchart illustrating a third example of processing executed by the processing unit 11 regarding the processing of generating training data. Hereinafter, a difference from the second example illustrated in FIG. 14 will be mainly described.

In the third example, a plurality of pieces of configuration information are set as configuration information of the servo system 4. For example, a plurality of sets of a model number of the servomotor 42 and a model number of the plant 43 are set.

In Step SP31 subsequent to Step SP11, the control unit 71 selects one piece of configuration information from a plurality of pieces of configuration information.

Next, the control unit 71 executes Steps SP21, SP12, and SP22 similarly to the second example. In Step SP12, the control unit 71 generates training data based on the information acquired in Step SP11, the configuration information selected in Step SP31, and the required performance item selected in Step SP21. In Step SP122, the control unit 71 causes the adjustment device 3 to execute control parameter optimization processing based on the configuration information selected in Step SP31 among a plurality of pieces of configuration information input in the input field 85, the operation condition information input in the input field 87, the required performance item selected in Step SP21 among a plurality of required performance items input in the input field 86, and the information on the combination selected in Step SP121.

Next, in Step SP22, the control unit 71 determines whether or not the processing in Steps SP21 and SP12 is completed for all the required performance items.

In a case where there is a required performance item for which the processing has not yet been executed (Step SP22: NO), the control unit 71 repeatedly executes the processing of Steps SP21 and SP12 for the required performance item for which the processing has not yet been executed.

In a case where the processing is completed for all the required performance items (Step SP22: YES), then in Step SP32, the control unit 71 determines whether or not the processing in Steps SP31, SP21, SP12, and SP22 is completed for all pieces of the configuration information.

If there is configuration information for which the processing has not been executed (Step SP32: NO), the control unit 71 repeatedly executes the processing in Steps SP31, SP21, SP12, and SP22 for the configuration information for which processing has not been executed.

In a case where the processing is completed for all pieces of the configuration information (Step SP32: YES), the control unit 71 ends the processing of generating training data.

The processing of generating training data described above is executed using a plurality of the adjustment devices 3A to 3C and a plurality of the servo systems 4A to 4C. By this, a database of the training data 22 including a large number of pieces of training data is accumulated in the storage unit 12 of the setting device 1.

(Training processing in training phase)

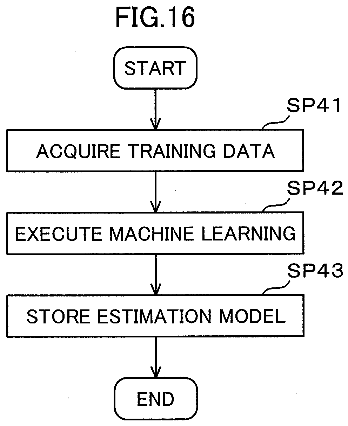

FIG. 16 is a flowchart illustrating processing executed by the processing unit 11 regarding training processing.

First, in Step SP41, the acquisition unit 72 acquires the training data 22 by reading the training data from the storage unit 12.

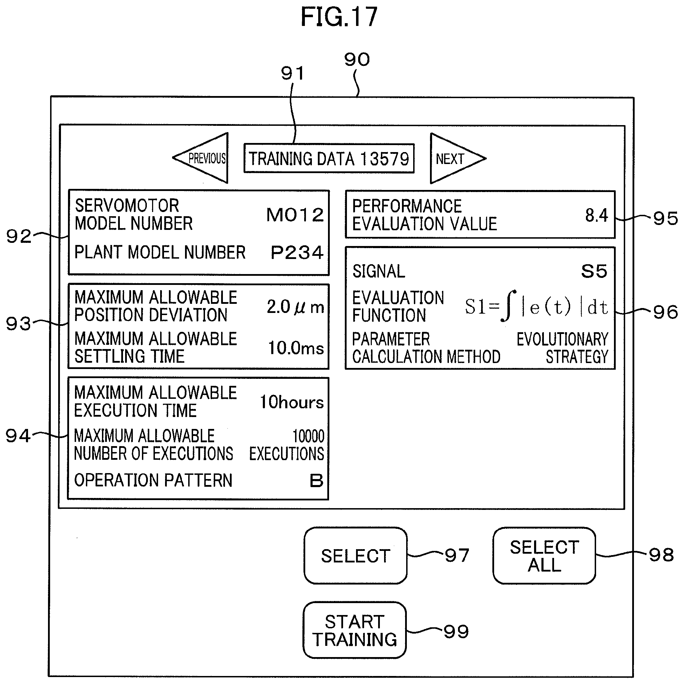

FIG. 17 is a diagram illustrating, in a simplified manner, an example of a setting screen 90 regarding training processing. The display control unit 77 creates the setting screen 90 and displays the setting screen 90 on the display section 14.

The setting screen 90 includes display sections 91 to 96, an icon 97 for instructing selection of training data displayed on the display section 91, an icon 98 for instructing selection of all pieces of training data included in the training data 22, and an icon 99 for instructing start of execution of training processing.

The display section 91 displays identification information of one piece of training data included in the training data 22. On the left and right sides of the display section 91, icons for switching training data displayed on the display section 91 are displayed.

The display section 92 (configuration information display section) displays configuration information included in the training data displayed on the display section 91.

The display section 93 (required performance item information display section) displays required performance item information included in the training data displayed on the display section 91.

The display section 94 (operation condition information display section) displays operation condition information included in the training data displayed on the display section 91.

The display section 95 (evaluation information display section) displays evaluation information included in the training data displayed on the display section 91.

The display section 96 (signal selection information display section, setting information display section, and calculation method selection information display section) displays signal selection information, setting information, and calculation method selection information included in the training data displayed on the display section 91.

When the icon 97 is selected by a click operation, a tap operation, or the like by an operator, the training data displayed on the display section 91 is selected as training data to be used for machine learning for generating the estimation model 23.

When the icon 98 is selected by a click operation, a tap operation, or the like by an operator, all pieces of training data included in the training data 22 are selected as training data to be used for machine learning for generating the estimation model 23.

When the icon 99 is selected by a click operation, a tap operation, or the like by an operator, next, in Step SP42, the training unit 73 executes machine learning using the training data selected in Step SP41. As an algorithm of machine learning, for example, deep reinforcement learning, in which a performance evaluation value is used as a reward, configuration information and required performance item information are used as inputs, and signal selection information, setting information, and calculation method selection information are used as outputs, is applied. By this, the estimation model 23 that estimates selection of an optimal signal in the signal acquisition unit 61, setting of an optimal evaluation function in the evaluation value calculation unit 62, and selection of an optimal parameter calculation method in the control parameter calculation unit 63 is generated based on the configuration information and the required performance item information.

Next, in Step SP43, the storage control unit 76 stores the machine-learned estimation model 23 generated in Step SP42 in the storage unit 12.

(Processing of setting optimal execution condition in use phase)

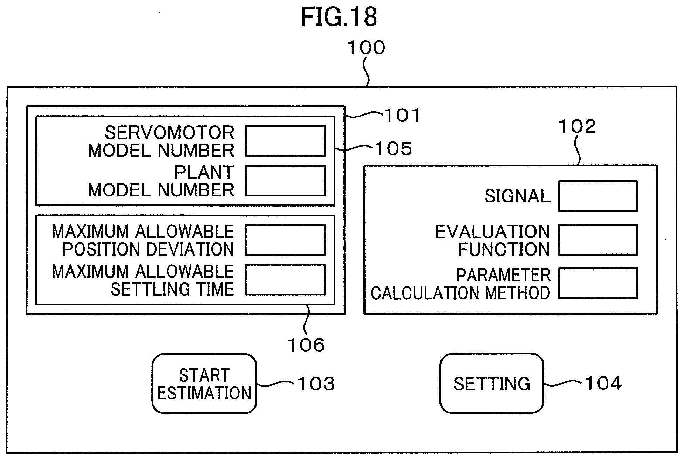

FIG. 18 is a diagram illustrating, in a simplified manner, an example of a setting screen 100 regarding processing of setting an optimal execution condition. The display control unit 77 creates the setting screen 100 and displays the setting screen 100 on the display section 14.

The setting screen 100 includes an input section 101, an output section 102, an icon 103 for instructing start of execution of estimation processing, and an icon 104 for instructing setting of an optimal execution condition.

The input section 101 includes input fields 105 and 106.

Configuration information related to a configuration of the servo system 4 corresponding to the adjustment device 3 as a setting target is input to the input field 105 (configuration information input section) by an operation of the input section 13 by an operator. The input field 105 includes an item to which a model number of the servomotor 42 is input as an attribute of the servomotor 42 and an item to which a model number of the plant 43 is input as an attribute of the plant 43.

Required performance item information regarding a required performance item for an operation of the plant 43 is input to the input field 106 (required performance item information input section) by operation of the input section 13 by an operator. The input field 106 includes an item to which maximum allowable position deviation regarding position deviation between a target position and an arrival position of a moving unit is input and an item to which maximum allowable settling time regarding settling time is input.

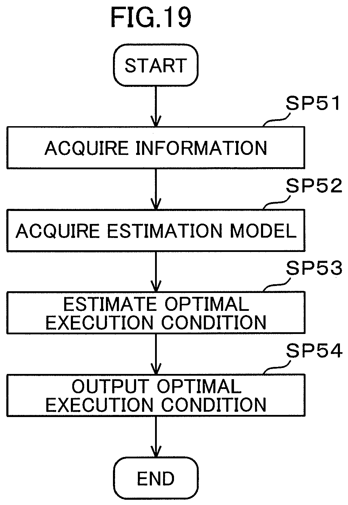

FIG. 19 is a flowchart illustrating processing executed by the processing unit 11 regarding processing of setting an optimal execution condition.

When the icon 103 is selected by a click operation, a tap operation, or the like of an operator, in Step SP51, the acquisition unit 72 acquires the configuration information input in the input field 105 and the required performance item information input in the input field 106.

Next, in Step SP52, the acquisition unit 72 acquires the estimation model 23 by reading the estimation model 23 from the storage unit 12.

Next, in Step SP53, the estimation unit 74 inputs the configuration information and the required performance item information acquired in Step SP51 to the estimation model 23 to estimate an optimal execution condition corresponding to the acquired configuration information and required performance item information. The optimal execution condition includes selection of an optimal signal in the signal acquisition unit 61, setting of an optimal evaluation function in the evaluation value calculation unit 62, and selection of an optimal parameter calculation method in the control parameter calculation unit 63. The display control unit 77 displays the selection of an optimal signal included in the optimal execution condition, the setting of an optimal evaluation function, and the selection of an optimal parameter calculation method in the output section 82 of the setting screen 100. Note that the estimation model 23 may further estimate an optimal operation condition (maximum allowable execution time, maximum allowable number of executions, or the like) corresponding to the acquired configuration information and required performance item information, and the optimal execution condition may further include optimal setting of operation condition information corresponding to the acquired configuration information and required performance item information.

When the icon 104 is selected by a click operation, a tap operation, or the like by an operator, in Step SP54, the output section 75 outputs the optimal execution condition estimated in Step SP53. The optimal execution condition is input to the communication unit 15. The communication unit 15 transmits the input optimal execution condition to the adjustment device 3 as a setting target. The processing unit 31 of the adjustment device 3 sets an execution condition for the signal acquisition unit 61, the evaluation value calculation unit 62, and the control parameter calculation unit 63 when control parameter optimization processing is executed according to the received optimal execution condition.

(Effect related to training phase)

According to the present embodiment, the estimation model 23 that estimates at least one of optimal setting of an evaluation function and optimal selection of a parameter calculation method based on configuration information and required performance item information can be generated by machine learning using a plurality of pieces of training data in a training phase. As a result, by using the estimation model 23 in a use phase, at least one of optimal setting of an evaluation function and optimal selection of a parameter calculation method can be estimated according to configuration information and required performance item information.

Further, as the training data 22 further includes signal selection information, the estimation model 23 for further estimating optimal selection of at least one signal can be generated.

Further, as the training data 22 further includes operation condition information, the estimation model 23 for further estimating optimal setting of an operation condition can be generated.

Further, it is possible to generate the estimation model 23 that further estimates at least one of maximum allowable execution time and a maximum allowable number of executions.

Further, an evaluation value can be calculated using an evaluation function based on at least one of the command signal S1 input to the control device 41 for driving the servomotor 42, the detection signal S3 indicating a detection value detected regarding an operation of the servomotor 42, and the detection signal S4 indicating a detection value detected regarding an operation of the plant 43.

Further, a control parameter can be optimized by a parameter calculation method based on an evaluation value including at least one of settling time, an integral value of position deviation, and a maximum value of position deviation.

Further, machine learning can be performed using the training data 22 including at least one of an attribute of the servomotor 42 and an attribute of the plant 43.

Further, machine learning can be performed using the training data 22 including at least one of a model number and specifications of the servomotor 42 and/or at least one of a model number and specifications of the plant 43.

Further, machine learning can be performed using the training data 22 including at least one of maximum allowable position deviation and maximum allowable settling time.

Further, machine learning can be performed using the training data 22 including at least one of a performance evaluation value input by an operator, a performance evaluation value derived based on a captured image, and a performance evaluation value derived based on a detection value.

Further, a plurality of pieces of training data can be efficiently acquired, and the estimation model 23 can be efficiently generated by machine learning using a plurality of pieces of training data.

(Effect regarding use phase)

According to the present embodiment, by using the estimation model 23 in a use phase, it is possible to estimate an execution condition including at least one of optimal setting of an evaluation function and optimal selection of a parameter calculation method corresponding to acquired configuration information and required performance item information. Further, by outputting the estimated execution condition, an execution condition of control parameter optimization processing can be appropriately set.

Further, it is possible to optimally select, from at least one signal, a signal used for calculation of an evaluation value.

Further, an operation condition of optimization processing can be optimally set as the estimation model 23 further estimates optimal setting of an operation condition of the optimization processing.

Further, at least one of maximum allowable execution time and a maximum allowable number of executions can be optimally set.

Further, an evaluation value can be calculated using an evaluation function based on at least one of the command signal S1 input to the control device 41 for driving the servomotor 42, the detection signal S3 indicating a detection value detected regarding an operation of the servomotor 42, and the detection signal S4 indicating a detection value detected regarding an operation of the plant 43.

Further, a control parameter can be optimized by a parameter calculation method based on an evaluation value including at least one of settling time, an integral value of position deviation, and a maximum value of position deviation.

Further, it is possible to estimate an optimal execution condition corresponding to at least one of an attribute of the servomotor 42 and an attribute of the plant 43.

Further, it is possible to estimate an optimal execution condition corresponding to at least one of a model number and specifications of the servomotor 42 and/or at least one of a model number and specifications of the plant 43.

Further, an optimal execution condition corresponding to at least one of maximum allowable position deviation and maximum allowable settling time can be estimated.

Further, control parameter optimization processing can be efficiently executed.

**Industrial Applicability**

The present disclosure is widely applicable to a servo control system including a servomotor and a plant.

**Claims**

1. An information processing method of generating an estimation model for setting an execution condition of optimization processing for a control parameter in a system including a servomotor, a target device driven by the servomotor, and a control device that controls an operation of the servomotor based on the control parameter,

the optimization processing including acquiring at least one signal regarding an operation of the system, calculating an evaluation value by using an evaluation function for the at least one signal, and optimizing the control parameter by a parameter calculation method based on the evaluation value, the information processing method comprising: acquiring, by an information processing device, training data including:

configuration information regarding a configuration of the system;
required performance item information regarding a required performance item for an operation of the target device;
setting information regarding setting of the evaluation function;
calculation method selection information regarding selection of the parameter calculation method from among a plurality of parameter calculation methods; and
evaluation information regarding an evaluation result of drive performance of the target device by the servomotor; and
generating an estimation model that estimates at least one of optimal setting of the evaluation function and optimal selection of the parameter calculation method based on the configuration information and the required performance item information by machine learning using a plurality of pieces of training data.

2.  The information processing method according to claim 1, wherein

   the training data further includes signal selection information regarding selection of the at least one signal, and
   the estimation model further estimates optimal selection of the at least one signal.

3.  The information processing method according to claim 1, wherein

   the training data further includes operation condition information regarding an operation condition of the optimization processing, and
   the estimation model further estimates optimal setting of the operation condition.

4.  The information processing method according to claim 3, wherein
   the operation condition includes at least one of maximum allowable execution time regarding execution time of the optimization processing and a maximum allowable number of executions regarding a number of operations of the target device in the optimization processing.

5.  The information processing method according to claim 1, wherein
   the at least one signal includes at least one of a command signal input to the control device for driving the servomotor, a detection signal indicating a detection value detected regarding an operation of the servomotor, and a detection signal indicating a detection value detected regarding an operation of the target device.

6.  The information processing method according to claim 1, wherein

   the target device includes a moving unit that moves by being driven by the servomotor, and
   the evaluation value includes at least one of settling time until position deviation between a target position and a detection position of the moving unit converges to an allowable value or less, an integral value of the position deviation, and a maximum value of the position deviation.

7.  The information processing method according to claim 1, wherein
   the configuration information includes at least one of an attribute of the servomotor and an attribute of the target device.

8.  The information processing method according to claim 7, wherein

   the attribute of the servomotor includes at least one of a model number and specifications of the servomotor, and
   the attribute of the target device includes at least one of a model number and specifications of the target device.

9.  The information processing method according to claim 1, wherein

   the target device includes a moving unit that moves by being driven by the servomotor, and
   the required performance item information includes at least one of maximum allowable position deviation regarding position deviation between a target position and an arrival position of the moving unit and maximum allowable settling time regarding settling time until position deviation between a target position and a detection position of the moving unit converges to an allowable value or less.

10. The information processing method according to claim 1, wherein the evaluation information includes at least one of a performance evaluation value input by an operator, a performance evaluation value derived based on a captured image obtained by capturing at least one operation of the servomotor and the target device, and a performance evaluation value derived based on a detection value detected for at least one operation of the servomotor and the target device.

11. The information processing method according to claim 1, wherein the optimization processing includes at least one of optimization processing by the servomotor driving the target device in a real space and optimization processing by the servomotor driving the target device by a simulation using a model of the system.

12. An information processing method of setting an execution condition of optimization processing for a control parameter in a system including a servomotor, a target device driven by the servomotor, and a control device that controls an operation of the servomotor based on the control parameter, the optimization processing including acquiring at least one signal regarding an operation of the system, calculating an evaluation value by using an evaluation function for the at least one signal, and optimizing the control parameter by a parameter calculation method based on the evaluation value, the information processing method comprising:

acquiring, by an information processing device, configuration information regarding a configuration of the system, and required performance item information regarding a required performance item for an operation of the target device;
acquiring a machine-learned estimation model,
the estimation model estimating at least one of optimal setting of the evaluation function and optimal selection of the parameter calculation method from among a plurality of parameter calculation methods based on the configuration information and the required performance item information;
estimating the execution condition including at least one of optimal setting of the evaluation function and optimal selection of the parameter calculation method corresponding to the acquired configuration information and the acquired required performance item information by inputting the acquired configuration information and the acquired required performance item information to the estimation model; and
outputting the execution condition.

13. The information processing method according to claim 12, wherein

the estimation model further estimates an optimal selection of the at least one signal, and
the execution condition further includes optimal selection of the at least one signal corresponding to the acquired configuration information and the acquired required performance item information.

14. The information processing method according to claim 12, wherein

the estimation model further estimates optimal setting of an operation condition of the optimization processing, and
the execution condition further includes optimal setting of the operation condition corresponding to the acquired configuration information and the acquired required performance item information.

15. The information processing method according to claim 14, wherein the operation condition includes at least one of maximum allowable execution time regarding execution time of the optimization processing and a maximum allowable number of executions regarding a number of operations of the target device in the optimization processing.

16. The information processing method according to claim 12, wherein the at least one signal includes at least one of a command signal input to the control device for driving the servomotor, a detection signal indicating a detection value detected regarding an operation of the servomotor, and a detection signal indicating a detection value detected regarding an operation of the target device.

**17.** The information processing method according to claim 12, wherein

the target device includes a moving unit that moves by being driven by the servomotor, and
the evaluation value includes at least one of settling time until position deviation between a target position and a detection position of the moving unit converges to an allowable value or less, an integral value of the position deviation, and a maximum value of the position deviation.

**18.** The information processing method according to claim 12, wherein
the configuration information includes at least one of an attribute of the servomotor and an attribute of the target device.

**19.** The information processing method according to claim 18, wherein

the attribute of the servomotor includes at least one of a model number and specifications of the servomotor, and
the attribute of the target device includes at least one of a model number and specifications of the target device.

**20.** The information processing method according to claim 12, wherein

the target device includes a moving unit that moves by being driven by the servomotor, and
the required performance item information includes at least one of maximum allowable position deviation regarding position deviation between a target position and an arrival position of the moving unit and maximum allowable settling time regarding settling time until position deviation between a target position and a detection position of the moving unit converges to an allowable value or less.

**21.** The information processing method according to claim 12, wherein
the optimization processing includes at least one of optimization processing by the servomotor driving the target device in a real space and optimization processing by the servomotor driving the target device by a simulation using a model of the system.

**22.** An information processing method of generating an estimation model for setting an execution condition of optimization processing for a control parameter in a system including a servomotor, a target device driven by the servomotor, and a control device that controls an operation of the servomotor based on the control parameter,
the optimization processing including acquiring at least one signal regarding an operation of the system, calculating an evaluation value by using an evaluation function for the at least one signal, and optimizing the control parameter by a parameter calculation method based on the evaluation value, the information processing method comprising:

displaying, by an information processing device, a setting screen,
the setting screen including a configuration information display section in which configuration information regarding a configuration of the system is displayed, a required performance item information display section in which required performance item information regarding a required performance item for an operation of the target device is displayed, a setting information display section in which setting information regarding setting of the evaluation function is displayed, a calculation method selection information display section in which calculation method selection information regarding selection of the parameter calculation method from among a plurality of parameter calculation methods is displayed, and an evaluation information display section in which evaluation information regarding an evaluation result of drive performance of the target device by the servomotor is displayed;
acquiring training data,
the training data including the configuration information displayed in the configuration information display section, the required performance item information displayed in the required performance item information display section, the setting information displayed in the setting information display section, the calculation method selection information displayed in the calculation method selection information display section, and the evaluation information displayed in the evaluation information display section; and
generating an estimation model that estimates at least one of optimal setting of the evaluation function and optimal selection of the parameter calculation method based on the configuration information and the required performance item information by machine learning using a plurality of pieces of training data.

**23.** An information processing method of setting an execution condition of optimization processing for a control parameter in a system including a servomotor, a target device driven by the servomotor, and a control device that controls an operation of the servomotor based on the control parameter,
the optimization processing including acquiring at least one signal regarding an operation of the system, calculating an evaluation value by using an evaluation function for the at least one signal, and optimizing the control parameter by a parameter calculation method based on the evaluation value, the information processing method comprising:

> displaying, by an information processing device, a setting screen including an input section and an output section, the input section including a configuration information input section to which configuration information regarding a configuration of the system is input, and a required performance item information input section to which required performance item information regarding a required performance item for an operation of the target device is input;
> acquiring the configuration information input to the configuration information input section and the required performance item information input to the required performance item information input section;
> acquiring a machine-learned estimation model,
> the estimation model estimating at least one of optimal setting of the evaluation function and optimal selection of the parameter calculation method from among a plurality of parameter calculation methods based on the configuration information and the required performance item information;
> estimating the execution condition including at least one of optimal setting of the evaluation function and optimal selection of the parameter calculation method corresponding to the acquired configuration information and the acquired required performance item information by inputting the acquired configuration information and the acquired required performance item information to the estimation model; and
> displaying, in the output section, at least one of optimal setting of the evaluation function and optimal selection of the parameter calculation method.

24. An information processing device that generates an estimation model for setting an execution condition of optimization processing for a control parameter in a system including a servomotor, a target device driven by the servomotor, and a control device that controls an operation of the servomotor based on the control parameter,
the optimization processing including acquiring at least one signal regarding an operation of the system, calculating an evaluation value by using an evaluation function for the at least one signal, and optimizing the control parameter by a parameter calculation method based on the evaluation value, the information processing device comprising:
acquiring training data including:

> configuration information regarding a configuration of the system;
> required performance item information regarding a required performance item for an operation of the target device;
> setting information regarding setting of the evaluation function;
> calculation method selection information regarding selection of the parameter calculation method from among a plurality of parameter calculation methods; and
> evaluation information regarding an evaluation result of drive performance of the target device by the servomotor; and
> generating an estimation model that estimates at least one of optimal setting of the evaluation function and optimal selection of the parameter calculation method based on the configuration information and the required performance item information by machine learning using a plurality of pieces of training data.

25. An information processing device that sets an execution condition of optimization processing for a control parameter in a system including a servomotor, a target device driven by the servomotor, and a control device that controls an operation of the servomotor based on the control parameter,
the optimization processing including acquiring at least one signal regarding an operation of the system, calculating an evaluation value by using an evaluation function for the at least one signal, and optimizing the control parameter by a parameter calculation method based on the evaluation value, the information processing device comprising:

> acquiring configuration information regarding a configuration of the system, and required performance item information regarding a required performance item for an operation of the target device;
> acquiring a machine-learned estimation model,
> the estimation model estimating at least one of optimal setting of the evaluation function and optimal selection of the parameter calculation method from among a plurality of parameter calculation methods based on the configuration information and the required performance item information;
> estimating the execution condition including at least one of optimal setting of the evaluation function and optimal selection of the parameter calculation method corresponding to the acquired configuration information and the acquired required performance item information by inputting the acquired configuration information and the acquired required performance item information to the estimation model; and
outputting the execution condition.

26. A program for causing an information processing device to execute information processing, the information processing device generating an estimation model for setting an execution condition of optimization processing for a control parameter in a system including a servomotor, a target device driven by the servomotor, and a control device that controls an operation of the servomotor based on the control parameter,

the optimization processing including acquiring at least one signal regarding an operation of the system, calculating an evaluation value by using an evaluation function for the at least one signal, and optimizing the control parameter by a parameter calculation method based on the evaluation value,
the information processing including:
acquiring training data including:

configuration information regarding a configuration of the system;
required performance item information regarding a required performance item for an operation of the target device;
setting information regarding setting of the evaluation function;
calculation method selection information regarding selection of the parameter calculation method from among a plurality of parameter calculation methods; and
evaluation information regarding an evaluation result of drive performance of the target device by the servomotor; and
generating an estimation model that estimates at least one of optimal setting of the evaluation function and optimal selection of the parameter calculation method based on the configuration information and the required performance item information by machine learning using a plurality of pieces of training data.

27. A program for causing an information processing device to execute information processing, the information processing device setting an execution condition of optimization processing for a control parameter in a system including a servomotor, a target device driven by the servomotor, and a control device that controls an operation of the servomotor based on the control parameter,

the optimization processing including acquiring at least one signal regarding an operation of the system, calculating an evaluation value by using an evaluation function for the at least one signal, and optimizing the control parameter by a parameter calculation method based on the evaluation value,
the information processing including:

acquiring configuration information regarding a configuration of the system, and required performance item information regarding a required performance item for an operation of the target device;
acquiring a machine-learned estimation model,
the estimation model estimating at least one of optimal setting of the evaluation function and optimal selection of the parameter calculation method from among a plurality of parameter calculation methods based on the configuration information and the required performance item information;
estimating the execution condition including at least one of optimal setting of the evaluation function and optimal selection of the parameter calculation method corresponding to the acquired configuration information and the acquired required performance item information by inputting the acquired configuration information and the acquired required performance item information to the estimation model; and
outputting the execution condition.

# FIG.1

# FIG.2

ADJUSTMENT DEVICE 3

<u>1</u>

31 PROCESSING UNIT

32 STORAGE UNIT

33 COMMUNICATION UNIT

34 COMMUNICATION UNIT

S4

S3

44 SENSOR

45 SENSOR

S1

4

CONTROL DEVICE

S2

SERVO MOTOR

PLANT

41

42

43

# FIG.3

# FIG.4

<u>31</u>

# FIG.5

POSITION DEVIATION

SETTLING
RANGE

TIME

SETTLING TIME

# FIG.6

# FIG.7

11

PROCESSING UNIT

CONTROL UNIT ~71

ACQUISITION UNIT ~72

TRAINING UNIT ~73

ESTIMATION UNIT ~74

OUTPUT SECTION ~75

STORAGE CONTROL UNIT ~76

DISPLAY CONTROL UNIT ~77

# FIG.8

80

81

85

| SERVOMOTOR MODEL NUMBER | |
| PLANT MODEL NUMBER | |

86

| MAXIMUM ALLOWABLE POSITION DEVIATION | |
| MAXIMUM ALLOWABLE SETTLING TIME | |

87

| MAXIMUM ALLOWABLE EXECUTION TIME | |
| MAXIMUM ALLOWABLE NUMBER OF EXECUTIONS | |
| OPERATION PATTERN | |

| PERFORMANCE EVALUATION VALUE | |

88

82

| SIGNAL | |
| EVALUATION FUNCTION | |
| PARAMETER CALCULATION METHOD | |

START OPTIMIZATION  83

OUTPUT  84

# FIG.9

(A)

ROTATION
SPEED

TIME (SECOND)

0        1        2

(B)

ROTATION
SPEED

TIME (SECOND)

0        1        2

(C)

ROTATION
SPEED

2

TIME (SECOND)

0        1

# FIG.10

67

68

CAMERA →S20→ PERFORMANCE EVALUATION VALUE CALCULATION UNIT →S21→

# FIG.11

69

S1 →

| PERFORMANCE EVALUATION VALUE CALCULATION UNIT | → S22 → |

S3,S4 →

# FIG.12

START

ACQUIRE INFORMATION — SP11

GENERATE TRAINING DATA — SP12

END

# FIG.13

```
            ┌─────────┐
            │  SP12   │
            └─────────┘
                 │
                 ▼
      ┌───────────────────────┐  SP121
      │  SELECT COMBINATION   │
      └───────────────────────┘
                 │
                 ▼
      ┌───────────────────────┐  SP122
      │ EXECUTE CONTROL       │
      │ PARAMETER             │
      │ OPTIMIZATION          │
      │ PROCESSING            │
      └───────────────────────┘
                 │
                 ▼            SP123
      <IS END CONDITION SATISFIED?> ──NO──┐
                 │ YES
                 ▼            SP124
      ┌───────────────────────┐
      │ CALCULATE PERFORMANCE │
      │ EVALUATION VALUE      │
      └───────────────────────┘
                 │
                 ▼            SP125
      ┌───────────────────────┐
      │ ADD TO CANDIDATE LIST │
      └───────────────────────┘
                 │
                 ▼            SP126
      <FINISHED FOR ALL COMBINATIONS?> ──NO──┐
                 │ YES
                 ▼            SP127
      ┌───────────────────────┐
      │ SELECT OPTIMAL        │
      │ COMBINATION           │
      └───────────────────────┘
                 │            SP128
                 ▼
      ┌───────────────────────┐
      │ GENERATE TRAINING DATA│
      └───────────────────────┘
                 │
                 ▼
            ┌─────────┐
            │ RETURN  │
            └─────────┘
```

# FIG.14

START

ACQUIRE INFORMATION — SP11

SELECT REQUIRED PERFORMANCE ITEM — SP21

GENERATE TRAINING DATA — SP12

FINISHED FOR ALL REQUIRED PERFORMANCE ITEMS? — SP22

NO

YES

END

EP 4 787 088 A1

# FIG.15

```
        START
          │
          ▼
  ACQUIRE INFORMATION          SP11
          │
          ▼ ◄──────────────────────────┐
  SELECT SYSTEM                SP31       │
  CONFIGURATION                           │
          │                               │
          ▼ ◄──────────────────┐         │
  SELECT REQUIRED              SP21       │
  PERFORMANCE ITEM                        │
          │                     │         │
          ▼                     │         │
  GENERATE TRAINING DATA       SP12       │
          │                     │         │
          ▼                    SP22       │
  FINISHED FOR ALL REQUIRED ── NO ────────┘
  PERFORMANCE ITEMS?
          │ YES
          ▼                    SP32
  FINISHED FOR ALL SYSTEM ──── NO ────────┐
  CONFIGURATIONS?                          (to SP31)
          │ YES
          ▼
         END
```

# FIG.16

START

↓ SP41

ACQUIRE TRAINING DATA

↓ SP42

EXECUTE MACHINE LEARNING

↓ SP43

STORE ESTIMATION MODEL

↓

END

# FIG.17

90

91

PREVIOUS  |TRAINING DATA 13579|  NEXT

92 —

SERVOMOTOR
MODEL NUMBER          MO12

PLANT MODEL NUMBER    P234

93 —

MAXIMUM ALLOWABLE
POSITION DEVIATION    2.0 $\mu$ m

MAXIMUM ALLOWABLE
SETTLING TIME         10.0ms

94 —

MAXIMUM ALLOWABLE
EXECUTION TIME        10hours

MAXIMUM ALLOWABLE            10000
NUMBER OF EXECUTIONS    EXECUTIONS

OPERATION PATTERN          B

PERFORMANCE
EVALUATION VALUE      8.4 — 95

SIGNAL                S5

EVALUATION
FUNCTION      $S1=\int |e(t)|dt$ — 96

PARAMETER           EVOLUTIONARY
CALCULATION METHOD    STRATEGY

SELECT — 97

SELECT
ALL — 98

START
TRAINING — 99

# FIG.18

100

101
105

102

SERVOMOTOR
MODEL NUMBER

PLANT
MODEL NUMBER

SIGNAL

EVALUATION
FUNCTION

PARAMETER
CALCULATION METHOD

MAXIMUM ALLOWABLE
POSITION DEVIATION

MAXIMUM ALLOWABLE
SETTLING TIME

106

START
ESTIMATION
103

SETTING
104

# FIG.19

```
        ┌─────────┐
        │  START  │
        └────┬────┘
             │                    SP51
             ▼
  ┌──────────────────────────┐
  │   ACQUIRE INFORMATION     │
  └──────────┬───────────────┘
             │                    SP52
             ▼
  ┌──────────────────────────┐
  │ ACQUIRE ESTIMATION MODEL  │
  └──────────┬───────────────┘
             │                    SP53
             ▼
  ┌──────────────────────────┐
  │     ESTIMATE OPTIMAL      │
  │   EXECUTION CONDITION     │
  └──────────┬───────────────┘
             │                    SP54
             ▼
  ┌──────────────────────────┐
  │     OUTPUT OPTIMAL        │
  │   EXECUTION CONDITION     │
  └──────────┬───────────────┘
             │
             ▼
        ┌─────────┐
        │   END   │
        └─────────┘
```

## INTERNATIONAL SEARCH REPORT

| International application No. |
| --- |
| **PCT/JP2024/033364** |

**A. CLASSIFICATION OF SUBJECT MATTER**

*G05B 13/04*(2006.01)i; *H02P 31/00*(2006.01)i
FI: G05B13/04; H02P31/00

According to International Patent Classification (IPC) or to both national classification and IPC

**B. FIELDS SEARCHED**

Minimum documentation searched (classification system followed by classification symbols)

G05B13/00-13/04; H02P31/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 9-131087 A (YASKAWA ELECTRIC MFG. CO., LTD.) 16 May 1997 (1997-05-16) entire text, all drawings | 1-27 |
| A | JP 2004-326200 A (MITSUBISHI HEAVY INDUSTRIES, LTD.) 18 November 2004 (2004-11-18) entire text, all drawings | 1-27 |
| A | JP 2018-152012 A (FANUC CORPORATION) 27 September 2018 (2018-09-27) entire text, all drawings | 1-27 |

☐ Further documents are listed in the continuation of Box C.　　☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **18 November 2024** | **26 November 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/033364**

| Patent document cited in search report | | | Publication date (day/month/year) | Patent family member(s) | | | Publication date (day/month/year) |
|---|---|---|---|---|---|---|---|
| JP | 9-131087 | A | 16 May 1997 | (Family: none) | | | |
| JP | 2004-326200 | A | 18 November 2004 | (Family: none) | | | |
| JP | 2018-152012 | A | 27 September 2018 | US | 2018/0267499 | A1 | |
| | | | | entire text, all drawings | | | |
| | | | | DE | 102018203702 | A1 | |
| | | | | CN | 108628355 | A | |

Form PCT/ISA/210 (patent family annex) (July 2022)

**EP 4 787 088 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6849643 B